Europäisches Patentamt

European Patent Office

Office européen des brevets

(11) Publication number: **0 104 247**
**B1**

## EUROPEAN PATENT SPECIFICATION

(45) Date of publication of patent specification: **16.12.87**

(21) Application number: **83901507.0**

(22) Date of filing: **24.03.83**

(86) International application number:
**PCT/US83/00412**

(87) International publication number:
**WO 83/03421 13.10.83 Gazette 83/24**

(51) Int. Cl.⁴: **C 08 L 53/00,** C 08 L 9/00,
C 08 L 67/06

(54) PROCESS FOR PREPARATION OF FREE FLOWING PARTICLES.

(30) Priority: **29.03.82 US 362702**

(43) Date of publication of application:
**04.04.84 Bulletin 84/14**

(45) Publication of the grant of the patent:
**16.12.87 Bulletin 87/51**

(84) Designated Contracting States:
**BE DE FR GB NL**

(56) References cited:
**FR-A-1 340 909**
**FR-A-1 399 576**
**GB-A-1 305 380**
**JP-A-56 024 146**
**SU-A- 711 053**
**SU-A- 729 066**
**US-A-3 853 796**
**US-A-3 930 107**
**US-A-4 029 862**
**US-A-4 357 439**
**US-A-4 357 444**

**CHEMICAL ABSTRACTS, vol. 78, no. 22, 4th
June 1973, p. 63, no. 137474n, Columbus, Ohio
(US) & JP -A-7308330**

(73) Proprietor: **THE FIRESTONE TIRE & RUBBER
COMPANY**
**1200 Firestone Parkway**
**Akron, Ohio 44317 (US)**

(72) Inventor: **HERGENROTHER, William L.**
**195 Dorchester Road**
**Akron, OH 44313 (US)**
Inventor: **GUNESIN, Binnur**
**27 Old Stirling Road**
**Warren, NJ 08818 (US)**

(74) Representative: **Kraus, Walter, Dr. et al
Patentanwälte Kraus, Weisert & Partner
Thomas-Wimmer-Ring 15
D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention is directed toward a process for the preparation of novel free flowing polymers. A number of polymers and copolymers are known that are tacky or sticky at room temperatures and which may also exhibit cold flow. A substance is said to cold flow if a quantity of it will gradually flow or spread itself out over a flat surface even though it is normally a solid and will retain a given shape for a short period of time.

Several polymers that are of this type include certain high vinyl polybutadienes and block copolymers of conjugated dienes and nylon. While these compounds have useful physical properties as thermosetting resins, they cannot be readily molded with compression or injection apparatus. Such apparatus is normally fed with pellets of the material which are deposited in a feed hopper. Pellets of these materials have a high tendency to stick to one another as well as surrounding surfaces thereby greatly inhibiting their transfer into the apparatus. Also, because they exhibit cold flow, the pellets tend to agglomerate and coalesce upon storage.

Previous attempts to eliminate tack and cold flow from polymers have included the use of various filler materials such as silica, carbon black, mica, and a variety of fibers. While such treatment can provide sufficient integrity to cold flow materials for them to hold a shape, it does little to eliminate surface tack. Moreover, high filler loadings can extend to several times the weight of the polymer thereby restricting the usage of the polymer to applications where the filler can be tolerated.

In order to provide tack-free surfaces, surface treatment of polymers is also possible. U.S. Pat No. 4,029,862 is directed toward a process of chlorinating solid linear polyethylene with chlorine in order to impart improved handling characteristics such as non-agglomeration. The process is not directly applicable to sticky, cold-flowable polymers, however, inasmuch as the polymer particles treated according to the patent had a free-flowing nature, suitable for extrusion operations, prior to the treatment.

Thus, while certain techniques have been tried to treat polymeric materials and alter their physical characteristics, the art of which we are aware has not provided a process for eliminating both undesirable surface tack and cold flow from polymers and copolymers that exhibit these properties.

The present invention is directed to a process for the preparation of free flowing pellets from tacky, cold flowing polymers comprising the steps of: adding from 5 to 45 parts of a non-cold flowing rubber to 55 to 95 parts of a tacky, cold flowing polymer to form a blend; forming pellets of said blend; subjecting said pellets to a surface treatment to remove tack; and thereafter separating said pellets to yield a free-flowing material.

A novel polymer blend is also provided by the present invention. The blend exhibits free flow in small particles and comprises from 55 to 95 parts of a tacky, cold-flowing polymer and from 5 to 45 parts of a non-cold flowing rubber wherein tack contributed by the cold flowing polymer is removed at the surface of the particles. Removal of the tack and the step of surface treatment in the foregoing method can be provided by immersing the pellets in an aqueous solution containing at least one member selected from the group consisting of $Br_2$, $Cl_2$, NaOCl, KOCl, $Ca(OCl)_2$, $KMnO_4$, $K_2Cr_2O_2$, $H_2O_2$ and $OsO_4$. Hydrochloric acid can also be added to the aqueous solution where one of the foregoing components other than $Br_2$, $Cl_2$, $H_2O_2$ and $OsO_4$ is present. This treatment provides a halogen, oxygen or hydroxyl group on the surface of said pellets. Alternatively, the surface treatment can be practiced by coating the surface of the pellets with a powdered filler material such as talc, silica, mica, polyethylene or the like.

Throughout this specification terms such as "tack", "free flowing", "cold flowing" and "non-cold flowing" are used in the following context. "Tack" is defined as that property which causes two materials to resist separation after their surface have been brought into contact for a short time under light pressure. "Tack" is also used synonomously with stickiness. "Free flowing" is defined as the ability of materials, stored in intimate contact, to resist coalescing and, therefore, remain pourable and separate from each other. "Cold flowing" is defined as that property where polymers or copolymers, under normal ambient conditions, are amorphous and flow readily due to gravitational forces. "Non-cold flowing" is defined as the property of a polymer or copolymer to retain its shape under ambient conditions.

Typical examples of a cold flowing, tacky polymer include the block copolymers of butadiene and caprolactam. Such polymers have many properties characteristic of the nylons, however, unlike the nylons, the polymers can be molded at temperatures below the melt temperature of the corresponding nylon and they can be milled at ambient temperatures. They possess upon cure good impact, good abrasion resistance, toughness and low coefficients of friction. Either 1,2-butadiene or 1,4-butadiene can be employed in the block copolymer to given copolymers moldable as plastics or rubbers, depending on the degree of cure. A particularly useful polymer is the block copolymer of 1,2-butadiene and nylon-6, designated by Firestone as Maran. It has a number average molecular weight of about 15,000 g/mole and a nylon content of 67 percent by weight.

The preparation of these polymers is described in U.S. Pat. No. 3,838,108, commonly owned by the Assignee of record. Other polymers set forth in the subject patent include block copolymers AB, wherein the A component is selected from the group consisting of conjugated dienes, conjugated diene copolymers with a vinyl substituted aromatic monomer such as styrene, aliphatic, aromatic and cycloaliphatic oxides and sulfides and, wherein the B component is selected from the group consisting of caprolactam, imides, urea, urethanes and phenol formaldehyde.

The foregoing monomers and block copolymers formed therefrom are thoroughly set forth in the aforementioned U.S. Pat. No. 3,838,108. Inasmuch as the polymers are known as is the process for their preparation, the novelty of the present invention is not directed thereto. Reference to the subject patent can be made by those skilled in the art for the useful block copolymers, hereinafter polymers, that cold flow and are tacky. As such, it has been difficult to employ such polymers in conventional processing equipment where the desired resin is placed in a hopper, in pellet or granular form, to be fed into the apparatus.

Another resin of which we are aware, that exhibits the undesirable properties of cold flow and tack is Dienite®, a linear high vinyl polymer of 1,3-butadiene prepared by the anionic polymerization of the monomer with a sodium catalyst in the presence of a polar modifier such as dimethyl ether, THF, tetramethylethylene diamine and the like. These polymers have at least 80 percent vinyl content and when cured they form hard, rigid, inert and thermally stable compounds. They can be prepared in the manner set forth in U.S. Pat. No. 2,772,254, the subject matter of which is also incorporated by reference herein. Cured properties of these polymers have been set forth in U.S. Pat. No. 3,835,075, commonly owned by the Assignee of record.

Yet another group of polymers that are cold flowing and sticky are the vinyl esters and unsaturated polyesters. For these polymers to be handled they must first be mixed with styrene and a thickening agent and then allowed to stand for a period until their viscosity increases. Although less sticky after such treatment, the polymers still exhibit cold flow. Also, the presence of styrene limits the use of these resins in high temperature applications. By treating the polymers according to the present invention, the initial mixing with styrene is not necessary, and a free flowing pellet can be obtained.

The foregoing constitute an exemplification of polymers having plastic or rubber properties but which are cold flowing and tacky. The subject invention is not intended to be limited to the polymers recited inasmuch as it is believed that the subject invention is applicable to any polymer having cold flow and which is tacky. Polymers included in this group may also be peroxide curable, that is, have carbon-carbon double bonds. Although peroxides are not a part of the present invention, it is believed that the double bonds are chemically reacted with the components of the aqueous solution and therefore peroxide curable can be another characteristic to describe the polymers that can be made into free flowing particles according to the process of the present invention. For ease of discussion, these polymers shall generally be referred to in the specification as cold flowing polymers.

The first step of the process of the present invention involves adding a non-cold flowing polymer, in either bulk or solution form, to a cold flowing polymer to form a blend. The non-cold flowing polymer component is incorporated in levels up to 45 parts per hundred rubber by weight (phr). The preferred polymers include rubbers such as ethylene-propylene-diene terpolymer; Nordel, a registered trademark of E. I. duPont de Nemours and Co. for ethylene-propylen-hexadiene terpolymer; natural rubber; styrene-butadiene rubber; nitrile-butadiene rubber; butyl rubber; chlorobutyl rubber; bromobutyl rubber; branched high molecular weight, high vinyl butadiene rubber; Norsorex, a polynorbornene available from American Cyanamid; polypentamer; the thermoplastic elastomers of styrene and conjugated dienes such as Kraton, a styrene-butadiene-styrene block copolymer and the like. Kraton is a registered trademark of Shell Chemical Co. For ease of discussion, these polymers are referred to as non-cold flowing polymers herein.

One particularly useful polymer in this group is the branched, high molecular weight, high vinyl 1,2-polybutadiene. In the uncured state, it is a rubber, as is the linear, 1,2-polybutadiene material discussed hereinabove, but differs primarily by the fact that it is non-cold flowing, while the former is a cold flowing material. It can be prepared by the anionic stereoregular polymerization of 1,3-butadiene in the presence of an organolithium initiator modified with bis-heterocyclic ethane compounds such as bis-morpholino ethane (DME), bis-piperidino ethane (DPE), bis-pyrrolidino ethane (DPEE), and bis-N-methyl piperazino ethane (DNMPE). The polymer obtained by this process contains as much as 100 percent vinyl polybutadiene and randomly distributed syndio and isotactic units. In general, a bis-piperidino ethane modified n-butyllithium initiator can be readily employed.

The remaining 55 phr or greater of the blend comprises the cold flowing polymer. The two components, cold flowing and non-cold flowing polymers, are mixed in a conventional manner with either a Brabender or a Banbury until a homogeneous blend is obtained or, they can be blended in solution. If desired, the blend may also have fillers, resins, vulcanizing agents and other additives incorporated at this point. Suitable fillers include silica, mica, $CaCo_3$, $CaSiO_3$, glass fibers, graphite fibers and the like which can be added in amounts of from about five to about 350 phr. Vulcanizing agents such as dicumyl peroxide (Dicup), Vulcup and others disclosed in U.S. Pat. No. 3,835,075, can be employed in amounts of from about 0.5 to about 10 phr. Additional ingredients that can be added include compounds such as colorants, lubricants, mold release agents and coupling agents.

The blend, with or without additives, is then cut into small particles such as pellets. The pellet size has not been found to be critical and the diameter is therefore discretionary. Common pellet sizes that can be employed have ranged from about 0.635 cm to 1.27 cm in diameter although larger or smaller diameters are equally applicable. As is known to those skilled in the art, pelletization, per se, is not novel. The step is required herein inasmuch as a pellet form of particle is ultimately desired.

The resulting pellets must be further treated shortly after their formation to avoid agglomeration. Although blending of the non-cold flowing polymer with the cold flowing polymer eliminates cold flow, the problem of surface tack, stickiness, is not eliminated. The process of the present invention therefore also includes a step to remedy the sticky surface of the pellets so they will not agglomerate or fuse together.

In this next step, the particles or pellets are subjected to a surface treatment, namely addition to an aqueous solution which can react chemically therewith. Typical chemical reactions include oxidation, halogenation, hydroxylation and the like. Suitable treating agents would include aqueous solutions of $Br_2$, $Cl_2$, NaOCl, KOCl, $Ca(OCl)_2$, $KMnO_4$, $K_2Cr_2O_2$, $H_2O_2$, $OsO_4$, and the like. While several of these can be employed alone, hydrochloric acid can be added to the sodium, potassium and calcium salts to speed the treatment. Where the cold flowing polymer comprises polybutadiene homopolymer or copolymer, it is believed that the chemical treatment adds to the surface unsaturation imparted by the polybutadiene portion of the blend.

The step can be practiced by immersing previously formed pellets in one of the aqueous solutions set forth hereinabove and stirring for about 0.5 to about 30 minutes, depending upon the concentration employed, at a temperature of 25°C. The treated pellets are then filtered from the aqueous solution and washed with water to remove any residue solution. After sufficient washing, the pellets are then air dried. The resulting pellets are then also tack free.

An alternative surface treatment would include dusting or coating the pellets with a layer of a powdery filler material such as talc, mica, silica, polyethylene or the like. Where the presence of a filler material in the final product would not be undesirable from consideration of physical properties or appearance, the dusting step can be employed. If, on the other hand, no filler should be present, the first treatment with an aqueous solution as disclosed hereinabove should be employed.

The pellets prepared by this process can be stored without coalescing for extended periods of time. Testing showed that pellets comprising about 80 phr Maran and 20 phr of non-cold flowing high molecular weight high vinyl polybutadiene exhibited no tack or cold flow and after four weeks of storage were still free flowing. Furthermore, the free flowing pellets were molded and found to possess the same physical properties as an untreated Maran resin of the same nylon content.

In the experimental work set forth hereinbelow, exemplifying the method of the present invention, a Maran resin was blended with a non-cold flowing high vinyl, high molecular weight 1,2-polybutadiene and then surface treated. A Dienite resin and a vinyl ester were also separately blended with the non-cold flowing high vinyl, high molecular weight 1,2-polybutadiene and then surface treated. Tests were conducted and have been reported providing free-flowing properties and tensile properties of the resins. Dienite is a registered trademark of The Firestone Tire & Rubber Company.

TREATMENT OF MARAN RESIN

Twelve separate blends were prepared of a Maran resin containing 67 weight percent of nylon as discussed hereinabove. A variety of non-cold flowing polymers were added to the Maran resin to form the blend as set forth in Table I hereinbelow. The general experimental procedure employed was as follows:

Blends comprising 70, 80 or 90 weight percent of Maran were prepared by adding 30, 20 or 10 weight percent respectively, of the non-cold flowing polymer. The blends were either prepared in solution or by cold milling in a Brabender for a short period of time until dispersion of the non-cold flowing polymer was complete. Following preparation of the blend, 2 phr of Vulcup R were added on an electric mill. Example 13 was a control comprising 100 percent Maran resin. Each of the blends were tested for cold flow by placing a block of the material on a flat surface and then visually observing its shape after one week at room temperature. Cold flow was observed when the block had lost its shape and appeared to have melted. While none of the blends exhibited any flow, the Maran resin alone (Example 15) was found to flow.

# 0 104 247

### TABLE I
### Blends Comprising Maran Resin and
### Non-Cold Flowing Polymers

| Example No. | Maran % | Non-cold Flowing Polymer | Preparation Method |
|---|---|---|---|
| 1 | 70 | 1,2-PBd[a] | Solution |
| 2 | 80 | 1,2-PBd[a] | Solution |
| 3 | 90 | 1,2-PBd[a] | Solution |
| 4 | 80 | Polynorbornene[b] | Solution |
| 5 | 90 | Polynorbornene[b] | Solution |
| 6 | 80 | 1,2-PBd[a] | Solution |
| 7 | 90 | Nordel/MgO[c] | Solution |
| 8 | 80 | Polypentamer | Solution |
| 9 | 90 | Polypentamer | Solution |
| 10 | 70 | Polynorbornene[b] | Mill |
| 11 | 80 | Polynorbornene[b] | Mill |
| 12 | 90 | Polynorbornene[b] | Mill |
| 13 | 100 | — | |

[a] PBd produced with modified anionic initiator
[b] Norsorex
[c] 97/3

Each of the Maran blends described in Table I and Example 13 were next subjected to oxidation in an aqueous solution as follows:

Approximately 18 grams of the blend were cut into 0.64 cm diameter pellets and stirred into 120 to 150 cc of a solution, as set forth in Table II, for 35 minutes at 25°C. After oxidation was complete, the pellets were isolated by filtration, water washed and air dried. Tack was determined by storing the treated pellets in a test tube 25 × 200 mm, two-thirds to three-quarters full and inverting after at least one day to determine if the pellets were free flowing.

5

TABLE II
Surface Treatment of Maran/Non-Cold Flowing Polymer Blends

| Ex. | Hypochlorite | | 3N HCl | | |
|-----|------|-----|----|----|-------------------|
| No. | metal | mE | cc | mM | Tack Observations |
| 1 | Na | 84 | 8 | 24 | None |
| 2 | Na | 84 | 8 | 24 | Slight, but some flow |
| 3 | Na | 84 | 8 | 24 | Free flowing |
| 4[a] | — | — | — | — | — |
| 5 | Na | 60 | 8 | 24 | Slight sticking, good flow |
| 6 | Ca | 84 | 8 | 24 | Slight sticking, some flow |
| 7 | Na | 84 | 8 | 24 | Slight sticking, some flow |
| 8 | Na | 84 | 14 | 42 | Slight sticking, some flow |
| 9 | Ca | 24 | 8 | 24 | Slight sticking, some flow |
| 10 | Ca | 12 | 4 | 12 | None |
| 11 | Ca | 24 | 8 | 24 | None |
| 12 | Na | 84 | 8 | 24 | Very slight, good flow |

[a] treated, but not reported.

Although not reported in Table II, the oxidation treatment given to Example 13 was not sufficient in and of itself to render a free flowing product. Surface tack was initially removed, however, once the pellets began to cold flow, fresh underlying surfaces were exposed which also presented new sticky surfaces quickly relegating the product to the state it had before pelletization and surface treatment *viz.* a sticky, cold flowing resin. The results clearly established the necessity of the first step of the present invention *i.e.,* the presence of a non-cold flowing polymer, as a prerequisite to obtaining free flowing pellets.

With respect to Examples 1—12, after standing in the test tubes under their own weight for four weeks all of the above examples would flow when the tubes were inverted, thus indicating that the process of the present invention is operable. The blends and Example 13 were subsequently cured for two hours at 157°C and then tested for flexural properties which have been reported in Table III. With the possible exception of Example 6, tensile properties of each of the other blends were comparable to or better than the properties for Example 13, the Maran resin, demonstrating that physical properties were not lost by practice of the present invention.

6

**0 104 247**

TABLE III
Physical Properties for Examples 1—13

| Example No. | HDT[a] °C | Izod J/m Notched | Izod J/m Unnotched | Rockwell E | Flexural Stress (MPa) | Flexural Modulus (GPa) | Gardner Impact (mJ) |
|---|---|---|---|---|---|---|---|
| 1 | 192 | 6.41 | 118.0 | 89 | 42.9 | 3.60 | 260 |
| 2 | 191 | 18.7 | 169.8 | 82 | 66.2 | 3.77 | 294 |
| 3 | 191 | 13.9 | 127.1 | 82 | 70.4 | 4.16 | 407 |
| 4 | 54 | 52.3 | 768.4 | 44 | 70.8 | 4.36 | 1130 |
| 5 | 76 | 36.3 | 459.8 | 67 | 60.9 | 3.60 | 791 |
| 6 | 72 | 18.7 | 222.7 | 47 | 34.1 | 1.85 | 599 |
| 7 | 179 | 17.1 | 216.8 | 61 | 58.3 | 2.95 | 407 |
| 8 | 65 | 31.0 | 432.5 | 70 | 70.9 | 3.40 | 746 |
| 9 | 168 | 24.6 | 393.0 | 74 | 71.9 | 3.47 | 565 |
| 10 | 50.5 | 34.7 | 398.9 | 41 | 59.4 | 2.96 | 712 |
| 11 | 57 | 26.2 | 295.8 | 49 | 62.9 | 2.95 | 746 |
| 12 | 87.5 | 35.2 | 446.4 | 64 | 64.7 | 3.04 | 633 |
| 13 | 175.5 | 23.5 | 268.1 | 74 | 63.3 | 2.77 | 712 |

[a] at 1.82 MPa.

Treatment of Dienite Resin

Dienite, a linear high vinyl, 1,2-polybutadiene containing about 95% vinyl was next subjected to the process of the present invention. Prior to treatment the resin was extremely tacky and readily cold flowing even with 300 parts of silica filler present. To 16.0 grams of Dienite was added 4.0 grams of the branched, high vinyl, high molecular weight polybutadiene non-cold flowing polymer discussed hereinabove. 70.0 grams of silica (325 mesh) and 1.2 grams of Vulcup R were also added and all components were mixed on an unheated Brabender Plasticorder for 5 minutes. The blend was next milled on an unheated electric mill with 6.0 grams of silica and 0.38 cc of vinyl triacetoxysilane until the entire mixture became homogeneous, approximately five minutes.

A tough rubbery mass resulted, which clearly would not cold flow. It was rolled into 1.25 cm roll and cut into pellets 1.25 cm long. These pellets were then treated in 120 cc of aqueous sodium hypochlorite solution (0.65 M) and 12 cc of concentrated HCl (NaOCl/HCl = 78 mM/144 mM). Some evolution of gas occurred while the solution was stirred for 30 minutes at 25°C. The pellets were then filtered, washed and dried. The pellets were next stored in a test tube at room temperature for a week. When the tube was inverted, none of the pellets stuck. The pellets were then molded at 175°C for 20 minutes and tested, exhibiting the following properties:

| | |
|---|---|
| Flexural strength | 49.83 MPa |
| Flexural modulus | 8.36 GPa |
| Maximum % strain | 0.65 |
| Energy at break | 168 kPa |
| Plasticity at 100°C | 33.2 cm$^2$ |

Physical properties of the untreated Dienite are comparable, again indicating that these are not sacrificed by practice of the present invention which does provide free-flowing particles of otherwise cold flowing tacky polymers.

7

Treatment of Vinyl Ester Resin

A vinyl ester from Dow Chemical Co. was obtained which contained 50 to 80% styrene, as was discussed hereinabove. It was first coagulated in alcohol to remove the styrene after which a sticky resin mass remained. A blend was then prepared by combining 16.0 grams of the vinyl ester resin (80 parts); 4.0 grams of the branched, high vinyl, high molecular weight non-cold flowing polybutadiene (20 parts); 0.4 grams of Vulcup R (2 parts); 40.0 grams of silica (200 parts) and 0.4 grams of Z6075 silane (2 parts) a coupling agent. The components were mixed for five minutes on a Brabender Plasticorder at room temperature and sheeted out on a mill and cut into small pellets.

The pellets were then treated in an aqueous chlorine solution comprising 30 cc of $Ca(OCl)_2$, 100 cc of water and 6 cc of concentrated HCl. The solution was stirred for 30 minutes at 25°C. The pellets were then filtered, washed and dried. The pellets were next stored in a test tube at room temperature for a week. When the tube was inverted, none of the pellets stuck. The pellets were then molded at 175°C for 20 minutes and tested, exhibiting the following properties:

| | |
|---|---|
| Flexural strength | 57.68 MPa |
| Flexural modulus | 7.84 GPa |
| Maximum % strain | 0.81 |
| Energy at break | 235 kPa |
| Plasticity at 100°C | 26.3 cm$^2$ |

Physical properties of the vinyl ester are comparable, indicating that these are not sacrificed by practice of the present invention which does provide free-flowing particles of otherwise cold flowing tacky polymers. Based upon the results reported herein, it should be apparent that the process of the present invention can be employed to provide novel free flowing polymers. The polymers prepared essentially retain their useful physical properties while undesirable cold flow and tack are virtually eliminated. It is to be understood that the various examples reported herein have been provided to present results obtainable by practice of the disclosed invention. Inasmuch as various polymers, as well as substances for the surface treatment step, that can be employed to practice the process of the present invention have been disclosed, the invention is not to be limited by the examples provided herein. It will be understood, therefore, that other polymers and surface treatment agents or methods of treatment can be substituted for those that have been exemplified. Regarding the selection of fillers, curatives and other additives and the like, the present invention should not be restricted to less than the total group of such compounds which are known for the preparation of thermoplastic resins inasmuch as they are only optionally employed and do not constitute the point of novelty.

**Claims**

1. A process for the preparation of free flowing pellets from tacky, cold flowing polymers comprising the steps of:
   adding from 5 to 45 parts of non-cold flowing rubber to 55 to 95 parts of a tacky, cold flowing polymer to form a blend;
   forming pellets of said blend;
   subjecting said pellets to a surface treatment to remove tack; and
   thereafter separating said pellets to yield a free flowing material.

2. A process, as set forth in claim 1, wherein said step of subjecting said pellets includes immersing said pellets in an aqueous solution containing at least one member of the group consisting of $Br_2$, $Cl_2$, NaOCl, KOCl, $Ca(OCl)_2$, $KMnO_4$, $K_2Cr_2O_2$, $H_2O_2$ and $OsO_4$.

3. A process, as set forth in claim 2, wherein said aqueous solution contains HCl and at least one member of the group consisting of NaOCl, KOCl, $Ca(OCl)_2$, $KMnO_4$, and $K_2Cr_2O_2$.

4. A process, as set forth in claim 1, wherein said step of subjecting said pellets comprises oxidation with an aqueous solution.

5. A process, as set forth in claim 1, wherein said step of subjecting said pellets comprises halogenation with an aqueous solution.

6. A process, as set forth in claim 1, wherein said step of subjecting said pellets comprises hydroxylation with an aqueous solution.

7. A process, as set forth in claim 1, wherein said tacky, cold flowing, polymer is selected from the group consisting of linear, high vinyl 1,2-polybutadiene, vinyl esters and unsaturated polyesters and block copolymers AB, wherein the A component is selected from the group consisting of conjugated dienes, conjugated diene copolymers with a vinyl substituted aromatic monomer, aliphatic, aromatic and cycloaliphatic oxides and sulfides and, wherein the B component is selected from the group consisting of caprolactam, imides, urea, urethanes and phenol formaldehyde.

8. A process, as set forth in claim 7, wherein said non-cold flowing rubber is selected from the group consisting of ethylene-propylene-hexadiene terpolymer, natural rubber; styrene-butadiene rubber, nitrile-butadiene rubber, butyl rubber, chlorobutyl rubber, bromobutyl rubber, branched high molecular weight, high vinyl butadiene rubber, polynorbornene, polypentamer and thermoplastic elastomers of styrene and conjugated dienes.

9. A process, as set forth in claim 8, wherein said tacky polymer comprises poly(butadiene-*b*-nylon-6) and said non-cold flowing rubber is a branched high vinyl, high molecular weight 1,2-polybutadiene.

10. A process, as set forth in claim 8, wherein said tacky polymer comprises poly(butadiene-*b*-nylon-6) and said non-cold flowing rubber is a polynorbornene.

11. A process, as set forth in claim 8, wherein said tacky polymer comprises poly(butadiene-*b*-nylon-6) and said non-cold flowing rubber is ethylene-propylene hexadiene terpolymer.

12. A process, as set forth in claim 8, wherein said tacky polymer comprises poly(butadiene-*b*-nylon-6) and said non-cold flowing rubber is a polypentamer.

13. A process, as set forth in claim 8, wherein said tacky polymer comprises linear high vinyl, 1,2-polybutadiene and said non-cold flowing rubber is a branched high vinyl, high molecular weight 1,2-polybutadiene.

14. A process, as set forth in claim 1, wherein said step of adding to form a blend is conducted by mixing until said non-cold flowing rubber is dispersed in said tacky polymer.

15. A process, as set forth in claim 1, including the additional step of:

adding suitable fillers during preparation of said blend in an amount of from about five to about 350 parts per 100 parts of polymer in said blend.

16. A process, as set forth in claim 1, including the additional step of:

adding a suitable curative during preparation of said blend.

17. A process, as set forth in claim 1, wherein said step of subjecting said pellets includes coating said pellets with a finely powdered filler material.

18. A free flowing polymer blend in the form of small particles comprising:

from 55 to 95 parts of a tacky, cold flowing polymer; and

from 5 to 45 parts of a non-cold flowing rubber wherein tack contributed by said cold flowing polymer chemically removed at the surface of said particles.

19. A free flowing polymer blend in the form of small particles, treated to remove surface tack, comprising:

from 55 to 95 parts of a tacky, cold flowing polymer; and

from 5 to 45 parts of a non-cold flowing rubber.

20. A novel polymer blend, as set forth in claims 18 or 19, wherein said tacky, cold flowing polymer is selected from the group consisting of linear, high vinyl 1,2-polybutadiene, vinyl esters and unsaturated polyesters and block copolymers AB, wherein the A component is selected from the group consisting of conjugated dienes, conjugated diene copolymers with a vinyl substituted aromatic monomer, aliphatic, aromatic and cycloaliphatic oxides and sulfides and, wherein the B component is selected from the group consisting of caprolactam, imides, urea, urethanes and phenol formaldehyde and,

said non-cold flowing rubber is selected from the group consisting of ethylene-propylene-hexadiene terpolymer, natural rubber; styrene-butadiene rubber, nitrile-butadiene rubber, butyl rubber, chlorobutyl rubber, bromobutyl rubber, branched high molecular weight, high vinyl butadiene rubber, polynorbornene, polypentamer and thermoplastic elastomers of styrene and conjugated dienes.

21. A novel polymer blend, as set forth in claim 18, wherein tack is removed by a group reactive with a carbon-carbon double bond and is selected from the group consisting of halogens, oxygen and hydroxyl.

22. A novel polymer blend, as set forth in claim 19, wherein the treatment to remove surface tack provides a group on the surface of said particles selected from the group consisting of halogens, oxygens and hydroxyl.

23. A novel polymer blend, as set forth in claim 19, wherein the treatment to remove surface tack provides a coating of powdered filler material on the surface of said particles.

**Patentansprüche**

1. Verfahren zur Herstellung von freifließenden Pellets aus klebrigen, kaltfließenden Polymeren, gekennzeichnet durch die Stufen:

Zugabe von 5 bis 45 Teilen nichtkaltfließendem Kautshuk zu 55 bis 95 Teilen klebrigem, kaltfließendem Polymeren, um ein Gemisch zu bilden;

Bildung von Pellets aus dem genannten Gemisch;

Unterwerfung der genannten Pellets einer Oberflächenbehandlung, um die Klebrigkeit zu entfernen; und

danach erfolgende Abtrennung der genannten Pellets, um ein freifließendes Material zu erhalten.

2. Verfahren nach Anspruch 1, dadurch gekennzeichnet, daß die genannte Stufe der Unterwerfung der genannten Pellets das Eintauchen der genannten Pellets in eine wäßrige Lösung, die mindestens eine Substanz aus der Gruppe bestehend aus $Br_2$, $Cl_2$, NaOCl, KOCl, $Ca(OCl)_2$, $KMnO_4$, $K_2Cr_2O_2$, $H_2O_2$ und $OsO_4$ enthält, umfaßt.

9

3. Verfahren nach Anspruch 2, dadurch gekennzeichnet, daß die genannte wäßrige Lösung HCl und mindestens eine Substanz aus der Gruppe bestehend aus NaOCl, KOCl, Ca(OCl)$_2$, KMnO$_4$ und K$_2$Cr$_2$O$_2$ enthält.

4. Verfahren nach Anspruch 1, dadurch gekennzeichnet, daß die genannte Stufe der Unterwerfung der genannten Pellets die Oxidation mit einer wäßrigen Lösung umfaßt.

5. Verfahren nach Anspruch 1, dadurch gekennzeichnet, daß die genannte Stufe der Unterwerfung der genannten Pellets die Halogenierung mit einer wäßrigen Lösung umfaßt.

6. Verfahren nach Anspruch 1, dadurch gekennzeichnet, daß die genannte Stufe der Unterwerfung der genannten Pellets die Hydroxylierung mit einer wäßrigen Lösung umfaßt.

7. Verfahren nach Anspruch 1, dadurch gekennzeichnet, daß das genannte klebrige, kaltfließende Polymere aus der Gruppe bestehend aus linearem hohem Vinyl-1,2-polybutadien, Vinylestern, und ungesättigten Polyestern und Blockcopolymeren AB, wobei die Komponente A aus der Gruppe bestehend aus konjugierten Dienen, konjugierten Dien-Copolymeren mit einem vinylsubstituierten aromatischen Monomeren, aliphatischen, aromatischen und cycloaliphatischen Oxiden und Sulfiden ausgewählt ist und wobei die Komponente B aus der Gruppe bestehend aus Caprolactam, Imiden, Harnstoff, Urethanen und Phenolformaldehyd ausgewählt ist, ausgewählt ist.

8. Verfahren nach Anspruch 7, dadurch gekennzeichnet, daß der nichtkaltfließende Kautschuk aus der Gruppe bestehend aus Ethylen-Propylen-Hexadien-Terpolymerem, Naturkautschuk, Styrol-Butadien-Kautschuk, Nitril-Butadien-Kautschuk, Butylkautschuk, Chlorbutylkautschuk, Brombutylkautschuk, verzweigtem hohem Vinyl-Butadien-Kautschuk mit hohem Molekulargewicht, Polynorbornen, Polypentameren und thermoplastischen Elastomeren von Styrol und konjugierten Dienen ausgewählt ist.

9. Verfahren nach Anspruch 8, dadurch gekennzeichnet, daß das klebrige Polymere Poly(butadien-b-nylon-6) umfaßt und daß der nichtkaltfließende Kautschuk verweigtes hohes Vinyl-1,2-polybutadien mit hohem Molekulargewicht ist.

10. Verfahren nach Anspruch 8, dadurch gekennzeichnet, daß das klebrige Polymere Poly(butadien-b-nylon-6) umfaßt und daß der nichtkaltfließende Kautschuk Polynorbornen ist.

11. Verfahren nach Anspruch 8, dadurch gekennzeichnet, daß das klebrige Polymere Poly(butadien-b-nylon-6) umfaßt und daß der nichtkaltfließende Kautschuk Ethylen-Propylen-Hexadien-Terpolymeres ist.

12. Verfahren nach Anspruch 8, dadurch gekennzeichnet, daß das klebrige Polymere Poly(butadien-b-nylon-6) umfaßt und daß der nichtkaltfließende Kautschuk ein Polypentameres ist.

13. Verfahren nach Anspruch 8, dadurch gekennzeichnet, daß das klebrige Polymere lineares hohes Vinyl-1,2-polybutadien unfaßt und daß der nichtkaltfließende Kautschuk ein verzweigtes hohes Vinyl-1,2-polybutadien mit hohem Molekulargewicht ist.

14. Verfahren nach Anspruch 1, dadurch gekennzeichnet, daß man die genannte Stufe der Zugabe, um ein Gemisch zu bilden, in der Weise durchführt, daß man vermischt, bis der nichtkaltfließende Kautschuk in dem klebrigen Polymeren dispergiert ist.

15. Verfahren nach Anspruch 1, gekennzeichnet durch die zusätzliche Stufe der

Zugabe von geeigneten Füllstoffen während der Herstellung des genannten Gemisches in einer Menge von etwa 5 bis etwa 350 Teilen pro 100 Teile des Polymeren in dem genannten Gemisch.

16. Verfahren nach Anspruch 1, gekennzeichnet durch die zusätzliche Stufe der

Zugabe eines geeigneten Härtungsmittels während der Herstellung des genannten Gemisches.

17. Verfahren nach Anspruch 1, dadurch gekennzeichnet, daß die genannte Stufe der Unterwerfung der genannten Pellets die Beschichtung der genannten Pellets mit einem feingepulverten Füllstoffmaterial einschließt.

18. Freifließendes Polymergemisch in der Form von kleinen Teilchen, dadurch gekennzeichnet, daß es

55 bis 95 Teile eines klebrigen, kaltfließenden Polymeren und

5 bis 45 Teile eines nichtkaltfließenden Kautschuks enthält, wobei die durch das genannte kaltfließende Polymere bedingte Klebrigkeit an der Oberfläche der genannten Teilchen chemisch entfernt werden ist.

19. Freifließendes Polymergemisch in der Form von kleinen Teilchen, die zur Entfernung der Oberflächenklebrigkeit behandelt worden sind, dadurch gekennzeichnet, daß es

55 bis 95 Teile eines klebrigen, kaltfließenden Polymeren und

5 bis 45 Teile eines nichtkaltfließenden Polymeren enthält.

20. Neues Polymergemisch nach den Ansprüchen 18 oder 19, dadurch gekennzeichnet, daß das klebrige, kaltfließende Polymere aus der Gruppe bestehend aus linearem hohem Vinyl-1,2-polybutadien, Vinylestern und ungesättigten Polyestern und Blockcopolymeren AB, wobei die Komponente A aus der Gruppe bestehend aus konjugierten Dienen, konjugierten Dien-Copolymeren mit einem vinylsubstituierten aromatischen Monomeren, aliphatischen, aromatischen und cycloaliphatischen Oxiden und Sulfiden ausgewählt ist und wobei die Komponente B aus der Gruppe bestehend aus Caprolactam, Imiden, Harnstoff, Urethanen und Phenolformaldehyd ausgewählt ist, ausgewählt ist und

daß der nichtkaltfließende Kautschuk aus der Gruppe bestehend aus Ethylen-Propylen-Hexadien-Terpolymerem, Naturkautschuk, Styrol-Butadien-Kautschuk, Nitril-Butadien-Kautschuk, Butylkautschuk, Chlorbutylkautschuk, Brombutylkautschuk, verzweigtem hohem Vinyl-Butadien-Kautschuk mit hohem Molekulargewicht, Polynorbornen, Polypentameren und thermoplastischen Elastomeren von Styrol und konjugierten Dienen ausgewählt ist.

21. Neues Polymergemisch nach Anspruch 18, dadurch gekennzeichnet, daß die Klebrigkeit durch eine

**0 104 247**

Gruppe entfernt worden ist, die mit einer Kohlenstoff-Kohlenstoff-Doppelbindung reaktiv ist und aus der Gruppe bestehend aus Halogenen, Sauerstoff und Hydroxyl ausgewählt ist.

22. Neues Polymergemisch nach Anspruch 19, dadurch gekennzeichnet, daß die Behandlung zur Entfernung der Oberflächenklebrigkeit auf der Oberfläche der genannten Teilchen eine Gruppe, ausgewählt aus der Gruppe bestehend aus Halogenen, Sauerstoff und Hydroxyl, zur Verfügung stellt.

23. Neues Polymergemisch nach Anspruch 19, dadurch gekennzeichnet, daß die Behandlung zur Entfernung der Oberflächenklebrigkeit einen Überzug von gepulvertem Füllstoffmaterial auf der Oberfläche der genannten Teilchen zur Verfügung stellt.

**Revendications**

1. Procédé de préparation de pastilles s'écoulant librement à partir de polymères collants s'écoulant à froid, comprenant les étapes qui consistent:
à ajouter 5 à 45 parties de caoutchouc ne s'écoulant pas à froid à 55—95 parties d'un polymère collant s'écoulant à froid pour obtenir un mélange;
à former des pastilles dudit mélange;
à soumettre lesdites pastilles à un traitement de surface pour éliminer l'adhésif; et
à séparer ensuite les pastilles pour obtenir une matière s'écoulant librement.

2. Procédé suivant la revendication 1, dans lequel l'étape de traitement desdites pastilles consiste à les immerger dans une solution aqueuse contenant au moins un représentant du groupe formé de $Br_2$, $Cl_2$, NaOCl, KOCl, $Ca(OCl)_2$, $KMnO_4$, $K_2Cr_2O_2$, $H_2O_2$ et $OsO_4$.

3. Procédé suivant la revendication 2, dans lequel la solution aqueuse contient du HCl et l'un au moins des représentants du groupe comprenant NaOCl, KOCl, $Ca(OCl)_2$, $KMnO_4$, et $K_2Cr_2O_2$.

4. Procédé suivant la revendication 1, dans lequel l'étape de traitement des pastilles consiste en une oxydation avec une solution aqueuse.

5. Procédé suivant la revendication 1, dans lequel l'étape de traitement deds pastilles consiste en une halogénation avec une solution aqueuse.

6. Procédé suivant la revendication 1, dans lequel le traitement des pastilles consiste en une hydroxylation avec une solution aqueuse.

7. Procédé suivant la revendication 1, d'ans lequel le polymère collant s'écoulant à froid est choisi dans le groupe comprenant un 1,2-polybutadiène linéaire à haute teneur en vinyle, des esters de vinyl et des polyesters non saturés et des copolymères séquencés AB où le composant A est choisi dans le groupe comprenant des diènes conjugués, des copolymères diéniques conjugués avec un monomère aromatique à substituant vinyle, des oxydes et sulfures aliphatiques, aromatiques et cycloaliphatiques, et le composant b est choisi dans le groupe comprenant le caprolactame, les imides, l'urée, les uréthannes et une résine phénol-formaldéhyde.

8. Procédé suivant la revendication 7, dans lequel le caoutchouc ne s'écoulant pas à froid est choisi dans le groupe comprenant un terpolymère éthylène-propylène-hexadiène, le caoutchouc naturel; un caoutchouc styrène-butadiène, un caoutchouc nitrile-butadiène, un caoutchouc butyle, un caoutchouc chlorobutyle, un caoutchouc bromobutyle, un caoutchouc butadiénique ramifié à haute teneur en vinyle, de haut poids moléculaire, un polynorbornène, un polypentamère ou des élastomères thermoplastiques de styrène et de diènes conjugués.

9. Procédé suivant la revendication 8, dans lequel le polymère collant comprend un poly(butadiène-b-nylon-6) et le caoutchouc ne s'écoulant pas à froid est un 1,2-polybutadiène ramifié de haut poids moléculaire, à haute teneur en vinyle.

10. Procédé suivant la revendication 8, dans lequel le polymère collant comprend du poly(butadiène-b-nylon-6) et le caoutchouc ne s'écoulant pas à froid est un polynorbornène.

11. Procédé suivant la revendication 8, dans lequel polymère collant comprend un poly(butadiène-b-nylon-6) et le caoutchouc ne s'écoulant pas à froid est un terpolymère éthylène-propylène-hexadiène.

12. Procédé suivant la revendication 8, dans lequel le polymère collant comprend un poly(butadiène-b-nylon-6) et le caoutchouc ne s'écoulant pas à froid est un polypentamère.

13. Procédé suivant la revendication 8, dans lequel le polymère collant comprend un 1,2-polybutadiène linéaire à haute teneur en vinyle et le caoutchouc ne s'écoulant pas à froid est un 1,2-polybutadiène ramifié de haut poids moléculaire, à haute teneur en vinyle.

14. Procédé suivant la revendication 1, dans lequel l'étape d'addition pour former un mélange est conduite par malaxage jusqu'à ce que le caoutchouc ne s'écoulant pas à froid soit dispersé dans le polymère collant.

15. Procédé suivant la revendication 1, comprenant l'étape supplémentaire qui consiste:
à ajouter des charges convenables pendant la préparation dudit mélange en une quantité d'environ cinq à environ 350 parties pour 100 parties de polymère dans ledit mélange.

16. Procédé suivant la revendication 1, comprenant l'étape additionnelle qui consiste:
à ajouter un agent convenable de réticulation pendant la préparation dudit mélange.

17. Procédé suivant la revendication 1, dans lequel l'étape de traitement des pastilles consiste à revêtir lesdites pastilles d'une charge en poudre fine.

18. Mélange polymérique s'écoulant librement sous la forme de petites particules, comprenant:

11

55 à 95 parties d'un polymère collant s'écoulant à froid; et

5 à 45 parties d'un caoutchouc ne s'écoulant pas à froid,

l'adhésivité du au polymère s'écoulant à froid étant éliminée chimiquement à la surface desdites particules.

19. Mélange polyméreique s'écoulant librement sous la forme de petites particules, traitées pour éliminer l'adhésivité de surface, comprenant:

55 à 95 parties d'un polymère collant s'écoulant à froid; et

5 à 45 parties d'un caoutchouc ne s'écoulant pas à froid.

20. Mélange polymérique nouveau suivant les revendications 18 ou 19, dans lequel ledit polymère collant s'écoulant à froid est choisi dans un groupe comprenant un 1,2-polybutadiène linéaire à haute teneur en vinyle, des esters de vinyle et des polyesters non saturés et des copolymères séquencés AB, où le composant A est choisi dans le groupe contenant des diènes conjugués, des copolymères diéniques conjugués avec un monomère aromatique à substituant vinyle, des oxydes et des sulfures aliphatiques, aromatiques et cycloaliphatiques, et dans lesquels le composant B est chois dans le groupe comprenant le caprolactame, des imides, l'urée, des uréthannes et une résine phénol-formaldéhyde, et

ledit caoutchouc ne s'écoulant pas à froid est choisi dans le groupe comprenant un terpolymère éthylène-propylène-hexadiène, le caoutchouc naturel; un caoutchouc styrène-butadiène, un caoutchouc nitrile-butadiène, un caoutchouc butyle, un caoutchouc chlorobutyle, un caoutchouc bromobutyle, un caoutchouc butadiénique ramifié à haute teneur en vinyle, de haut poids moléculaire, un polynorbornène, un polypentamère et des élastomères thermoplastiques de styrène et de diènes conjugués.

21. Mélange polymérique nouveau suivant la revendication 18, dans lequel l'adhésivité est éliminée par un groupe pouvant réagir avec une double liaison carbone-à-carbone, choisi entre des halogènes, l'oxygène et le groupe hydroxyle.

22. Mélange polymérique nouveau suivant la revendication 19, dans lequel le traitement pour éliminer l'adhésivité de surface apporte un groupe, à la surface desdites particules, choisi entre des halogènes, l'oxygène et le groupe hydroxyle.

23. Mélange polymérique nouveau suivant la revendication 19, dans lequel le traitement pour éliminer l'adhésivité de surface forme un revêtement d'une charge en poudre à la surface desdites particules.